# EUROPEAN PATENT APPLICATION

(11) **EP 1 349 249 A1**
(43) Date of publication of application: **01.10.2003**
(21) Application number: 02252294.0
(22) Date of filing: 28.03.2002
(51) Int. Cl.: H02G 3/06, G02B 6/44

(54) **Corner piece for service provision ducting and corner assembly**

(71) Applicant: C & C MARSHALL LIMITED, ST. Leonards-on-Sea, East Sussex TN38 9YJ (GB)
(72) Inventor: Austin Brian, Westfield TN35 4QZ (East Sussex) (GB); Softley,Andrew John Kenneth, St Leonards TN37 7EF East Sussex (GB); Wilson Ron, Maidstone ME16 8NR--Kent (GB)
(74) Representative: Lamb, Martin John Carstairs

(57) **Abstract**

In order to provide a comer assembly for service provision ducting which can provide a radius of curvature of not less than 50mm and which is easy to construct and install, there is provided a comer piece 128 which comprises end portions which lie flat against the floor members of sections of service provision ducting 124,125, the end portions being joined by a curved middle section. The curved middle section is curved in the direction joining the end portions but, in a direction normal to the direction joining the end portions, it is straight. This gives it flexibility. The comer piece 128 further comprises a pair of rib parts projecting from a rear surface thereof, each rib part having a straight edge for lying against the floor member of the respective section of service provision ducting 124, 125. The comer piece 128 has no outwardly projecting wall members. A slot 129 is formed at each end of the comer piece for engaging around a longitudinally extending engagement member 126,127 formed in the respective section of service provision ducting 124,125. Such engagement structures are normally provided for engaging conductors, signal cables or other fittings. The slots 129 suitably extend for about 20mm in the curved direction.

## Description

The present invention relates to a corner piece for joining together two sections of service provision ducting at an angle to one another, and to a corner assembly comprising two sections of service provision ducting at a angle to one another joined by a corner structure.

Ducting for providing for example electrical and communications services is widely used within buildings. Such ducting typically comprises a longitudinally extending channel of indefinite length defined by a longitudinally extending base member and a pair of longitudinally extending wall members projecting from the base member. Various longitudinally extending mounting means are typically provided for supporting within the ducting longitudinally extending electrical conductors (commonly called busbars), or electrical cables or data communications cable and fibre optic cables.

The ducting may be further subdivided into a pair of parallel co-extending channels of indefinite length divided by a longitudinally extending internal wall member projecting from the base member. This arrangement is commonly employed to provide channels for different types of service or services which need to be kept away from one another, to prevent electrical short circuits or interference between signals carried by different cables. This division of ducting into parallel channels is referred to as "segregation".

The ducting may comprise trunking which is typically mounted on walls or floors extending in a horizontal or vertical direction. The line of the ducting may include at least one corner. The corner may lie within a plane (a so called "flat bend") or it may extend across the intersection between two walls which meet at an internal bend or at an external bend.
Where the line of ducting includes such a bend, normal practice has been to lay service provision ducting up to or close to the position of the corner and to either cut the ducting in a mitre so that it forms the corner itself or to provide corner structures which cover the ducting at the corner.

Particular problems can be encountered when the ducting is intended to carry communications cables, particularly fibre optic cables.

Due to the internal design of such cables, it is important not to bend them in such that way that they have a radius of curvature less than a given amount, which is normally from 25m to 75mm, with 50mm being typical. The actual value will be determined by the physical properties of the cable and is normally specified by the manufacturer. An ordinary mitre bend or normal bend structure in ducting will contain curves of radius of curvature much less than 50mm which will be unsuitable for fibre optic signal cables.

This problem has been dealt with in the past by providing special corner pieces which have a defined radius of curvature extending over the region of the corner, which engage with the existing ducting. Examples of this arrangement are shown for example in GB2338679 and WO98/47211.

Each of these describes special corner pieces for providing a radius of not less than 50mm. However, each requires a special base part which entirely replaces the service provision ducting at the respective corner. This introduces a number of problems. The separate corner piece has to be separately fixed to prevent it from being knocked out of position. Furthermore, the fitter would normally need to install the corner piece first and afterwards accurately install the ducting, taking care not leave any gaps between the corner piece and the ducting. This is the laborious and prone to error. Existing ducting systems can only be upgraded to improve the design of corner by replacing whole sections of ducting, which can be a complex procedure. The base part required can be complex in shape and bulky.

In each of GB2338679 and WO98/47211, it is not generally possible to accommodate a bend which is not exactly at a right angle. There is no disclosure in either application of how longitudinally extending mounting means located in the base of the service provision ducting sections are to be accommodated at the bend.

The present inventors have sought a design of corner structure and corner assembly which is simple to construct, can be retro-fitted to existing bends without extensive replacement of trunking sections and which is sufficiently rigid when in place to withstand impacts which are normal in use.

The present inventors have realised that, if the service provision ducting sections are continued substantially to the corner point, a base, whose radius is from 25mm to 75mm, can be provided which engages in the channels of the trunking. In this case, a great part of the rigidity of the structure comes from the ducting sections themselves. The curved base need only have simple ribs configured to engage with the bottom of the ducting sections in order to be located firmly in place.

The present inventors have realised that it is particularly advantageous if the ribs do not extend around the whole of the curve. If the curved base is curved in only one direction, slight flexing of the base will be possible in portions where the ribs are absent, because there will be no stiffening against flexing. In this way, slight variations from a right angle can be easily accommodated without any structural weakening or degradation of overlap between sections.

The present inventors have further realised that, in order to fit smoothly over longitudinally extending structures in the base of service provision ducting, longitudinally extending slots should be provided in the curved base member which fit over the engaging structures.

Accordingly, in a first aspect, the present invention provides a corner piece for extending between two sections of service provision ducting, comprising at least one surface comprising two end portions connected by a centre portion, the surface including at least one curved region, curving in a direction extending between the end portions, the curved region having a radius of curvature not less than a value from 25mm to 75mm, the corner piece comprising at least one rib, the rib projecting from a rear surface of the corner piece, the corner piece having no walls extending from the front surface thereof.

The rib may provide a straight edge which, in use, can rest against the floor member or wall member of service provision ducting, allowing the corner piece to be securely placed in the service provision ducting.

The first aspect, further provides a corner assembly, comprising first and second sections of service provision ducting, meeting at an angle, each section comprising a longitudinally extending floor member and at least one longitudinally extending wall member projecting from the floor member, a corner piece being provided, extending between the two sections of service provision ducting, the corner piece comprising a surface having a first end and a second end, and a curved section of radius not less than a value in the range 25-75mm, joining the first and second ends of the corner piece, the corner piece having no walls projecting therefrom in the direction parallel to the wall members, the corner piece comprising at least one rib projecting from a rear surface of the corner piece and lying against the floor member or wall member of the first or second section of service provision ducting.

In the first aspect of the invention, a corner assembly is provided which includes a corner piece which may be snugly received in a channel of the service provision ducting. The service provision ducting sections may provide the shape of the corner assembly. The corner piece maybe held in position by engagement with the wall members of the service provision ducting and by engagement of the rib against a floor member or wall member of at least one of one of the sections of service provision ducting.

In the first aspect of the invention, upstanding walls in the corner piece which project in the same direction as the wall members of the service provision ducting can be completely absent. This allows a corner piece to be formed in a very simple manner but which is still capable of providing good support for cables in a curve of radius not less than a value from 25mm to 75mm.

In a second aspect of the invention, there is provided a corner piece for extending between two sections of service provision ducting which meet at an angle, comprising at least one surface comprising two end edges, the surface being curved in a direction extending between the end edges, the radius of curvature being not less than a value in the range 25-75mm, the surface comprising at least one slot extending in the curved direction from at least one end of the corner piece for at least 15mm.

In the second aspect of the invention, there is also provided a corner piece for extending between two sections of service provision ducting which meet at an angle, comprising at least one surface comprising two ends, the surface being curved in the direction extending between the ends, the radius of curvature being not less than a value in the range 25-75mm, at least one edge of the curved section comprising at least one slot extending in the curved direction for at least 15mm.

The present inventors have found that by providing a slot which extends for a sufficient distance in the curve direction, a corner piece can be provided which can be inserted into the channels of service provision ducting, the slot being configured to fit over any engagement structures which project from the floor of the service provision ducting. As noted above, such engagement structures are typically provided for providing engagement points for cables or conductors enclosed in the service provision ducting. It is has been found that the slots should be at least 15mm long and preferably at least 20mm long in order to fit over most types of engagement structure.

The second aspect of the invention further provides a corner assembly comprising first and second sections of service provision ducting, meeting at an angle, each section comprising a longitudinally extending floor member and at least one longitudinally extending wall member projecting from the floor member, and at least one engagement member projecting from the floor member, a corner piece being provided, extending between the two sections of service provision ducting, the corner piece comprising a surface having a first end lying on the floor member of the first section of service provision ducting and a second end, and a curved section of radius not less than a value in the range 25-75mm, joining the first and second end, the first and second ends each having at least one slot extending along the corner piece, the edges of the slot engaging around the engagement member of the first section of service provision ducting.

The second aspect of the invention yet further provides a corner assembly comprising first and second sections of service provision ducting, each section comprising a longitudinally extending floor member and at least one longitudinally extending wall member projecting from the floor member, the floor members being substantially coplanar, and at least one engagement member projecting from the floor member, a corner piece being provided extending between the two sections of service provision ducting, the corner piece comprising a surface having a first end lying on the wall member of the first section of service provision ducting and a second end, and a curved section of radius not less than a value falling in the range 25mm-75mm joining the first and second ends, at least one edge of the curved section comprising at least one slot engaging around the engagement member of the first section of service provision ducting.

There may be more than one slot in each end of the surface, for engaging at least two sets of longitudinally extending engaging members. Preferably, the slots extend substantially parallel to one another. Where the sections of service provision ducting have engaging members of different width, different width of slot may be provided in the ends of the curved sections.

Preferably, each of the first, second and third aspects of the invention incorporates features from the other aspect of the invention.

The corner piece of the first aspect of the invention may be used in service provision ducting, with one end portion resting on the floor member or wall member of a first section of service provision ducting and a second end portion resting on the floor member or wall member of a second section of service provision ducting. Suitably, the corner piece of the first aspect is used in conjunction with service provision ducting with engagement members extending from the floor member of the ducting, in which case it is preferred that the end edge of an end portion of the corner piece comprises at least one slot extending in the direction of the curve joining the end portions, the slots extending preferably for 15mm in the direction of the curve so that in use, the slots can extend around the engagement members.

In the second and third aspects of the invention, the corner piece suitably comprises at least one rib projecting from a rear surface, for engagement with the wall member or floor member of a section of service provision ducting. Preferably, there are no upstanding walls extending from the front surface of the corner piece in the same direction as the wall member of the service provision ducting.

Preferably, the corner piece of the first, third and fourth aspect of the invention has no wall extending in the same direction as the wall members of the service provision ducting.

In all aspect of the invention, the curved section of the corner piece will have a radius of curvature which is not less than a pre-determined value. The pre-determined value will be fixed by the manufacturer of the fibre optic cable to be used. The predetermined value lies in the range 25-75mm.

Preferred features of the invention will now be described.

The corner piece or corner assembly according to the present invention can be used with ducting of any suitable type. The ducting may be made of cast, moulded vacuum formed or extruded material, for example thermoplastic or metal, particularly uPVC or aluminium. Suitably the ducting comprises other members projecting from the base member for engaging with cables, conductors, busbars, optical fibres etc. The ducting may comprise cover means for closing the channels. Suitable ducting is described for example in GB-A-2253096 and GB-A-2282278.

The two sections of service provision ducting may meet at a flat - T, flat bend, internal bend or external bend. They may meet at any angle, though it is preferred that they meet substantially at a right angle. The sections of service provision ducting may extend right up to the corner, abutting one another at the corner or they may be finished slightly short of the corner, according to installation practices. The ends of the sections of service provision ducting may be cut at an angle, to provide a mitre joint.

Where the sections of service provision ducting meet to form a flat T, it is preferable that there is a first section of service provision ducting and a second section of provision ducting extending up to and abutting a side of the first section of service provision ducting, a wall member of the first section of service provision ducting being removed at a position where it meets the second section of service provision ducting.

More than two sections of service provision ducting may meet. For example, a cross-over formation may be formed. For example, there may be a first section of service provision ducting and second and third sections of service provision ducting extending up to and abutting opposite sides of the first section of service provision ducting, wall members of the first section of service provision ducting being removed at the positions of the second and third sections of service provision ducting.
The corner piece or assembly itself may be formed of any suitable material, for example metal or thermoplastic, such as aluminium or uPVC. It may be formed by any suitable method, for example moulding or forming.

The corner piece used in all aspects of the invention is preferably for use in a corner assembly in which sections of service provision ducting meet at an internal or external angle of about 90°. To achieve this, the respective end surfaces of the corner piece will lie at about 90° to another. Where the corner piece is for use with an internal bend, the curved surface suitably comprises a smooth curve of radius not less than a value in the range 25-75mm joining the end surfaces. Where it is for use with an external bend, the surface suitably comprises in succession, a first curved section of radius not less than a value in the range 25-75mm, leading to a second curved section of radius of curvature not less than a value falling in the range 25-75mm which is curved in the opposite direction to the first curved section and a third, final curved section of radius of curvature not less than a value falling in the range 25mm-75mm which is curved in the same direction as the first curved surface.

In each aspect of the invention, the corner piece preferably curves in a direction joining its ends, the curved region being straight in a second direction normal to the curve direction. In this way, the corner piece will resemble a flat strip which has been curved. It will retain a certain amount of flexibility because it has only been curved in one direction. The curved surface may be described in terms in how it appears when seen in different directions. In the first direction, the surface will appear as a curved line of small width, suitably in the range .5-4mm. In two other directions at right angles to the first direction, the curved surface will appear to be a longitudinally extending strip.

The rib extending from the rear surface of the corner piece preferably has a straight edge or an edge which lies in a flat plain. In this way, it can lie flat against a flat wall such as a floor member or wall member of service provision ducting.

Preferably, the rib, is substantially absent in a centre portion of the corner piece between the end portions. In this way, the rib will not prevent flexing of the centre portion to accommodate variations in the angle between the sections of service provision ducting.

Preferably, the corner piece is for use with sections of service provision ducting which have at least two longitudinally extending wall members, the corner piece being engagable with the floor member of the section of the service provision ducting between the wall members.

The width of the surface in the direction normal to the curved direction is suitably chosen so that the corner piece can fit just inside the channel of a selected type of service provision ducting, with the edges of the corner piece which are parallel to the curved direction substantially touching the wall members of the service provision ducting, at least in the end parts of the corner piece, when in place.

The corner piece may have means for fixing it with respect to the service provision ducting. For example, holes may be provided through which screws can be engaged. Resilient snap fit means may be provided for engagement onto the trunking, for example parts of the service provision ducting normally provided for engaging lid members etc. Alternatively, if the curved edges of the surface are substantially parallel to one another they will be able to form a smooth, secure fit between the parallel wall members of the sections of service provision ducting. As the corner pieces will be protected by the service provision ducting from interference from without, they do not necessarily require further fixing means. This allows a particularly simple design to be achieved.

Suitably, the corner pieces are formed of relatively flat section material having a thickness in the range 0.5-4mm more preferably 1.5-3mm, and more preferably 1.8-2.5mm. This allows the corner piece to be light but still rigid. To ensure as smooth as possible a transition at the corner, the end regions of the surface where they meet the floor members of the service provision ducting may be planed.

When a corner piece according to any aspect of the present invention for an internal bend is in position in an internal bend, it will define a surface extending across the bend, whose radius of curvature is not less than a value in the range 25-75mm. If cables such as fibre optic cables are laid into the trunking, they will not be able to form a curve in the corner which has a radius of less than the desired value. They are thereby protected from becoming kinked. Similarly, if a corner piece according to any aspect of the invention is used in an external bend, if cables such as fibre optic cables are pulled tight around the corner, the radius of curvature will not be less than the desired value.
Where locating ribs are used, there are preferably at least two. They are preferably separated from one another so that the surface between them is not stiffened by the ribs and allows flexibility. They are suitably separated by distance in the range 1cm - 10 cm. The straight edges of the ribs are suitably substantially parallel with the end sections of the curved surface and may even lie substantially in the plane of the end portion of the curved surface. Where at least two ribs are present, their straight edges may lie at an angle to one another, preferably substantially at a right angle to one another.

It is preferable that there are no upstanding walls projecting in the same direction from the front of the surface in the same direction as the wall members of the service provision ducting. As a substantial part of the lateral guidance of the cables can be provided by the wall members of the service provision ducting, it may not be necessary to have wall members on the corner piece. Nonetheless, it is possible in some aspects of the invention to provide at least one wall member extending from the front of the surface. This is particularly valuable in external bends to provide additional guidance for cables around the corner.

It is particularly advantageous if the corner structure of the present invention is used in combination with a corner cover structure for an internal on external bend comprising:
first and second end walls spaced apart from one another,
a joining wall extending between the first and second end walls, respective edges of the end walls and the joining wall defining together a first opening and a second opening for receiving two sections of service provision ducting,
the joining wall comprising at least one curved section, the radius of curvature of the curved section of the joining wall being greater than or equal to a value in the range of 25-75mm,
at least one segregating surface extending from the curved wall between the end walls for dividing at least part of the space between the end walls into at least two regions.

The corner structure of the present invention may also be used with a corner cover structure for a flat bend comprising:
a first, outer wall and a second, inner wall displaced from the first wall, a joining surface extending between the first and second walls, respective edges of the first and second walls and the joining surface defining together a first opening and a second opening for receiving two sections of service provision ducting,
the inner wall comprising at least one curved section, the radius of curvature of the curved section of the joining wall being not less than a value in the range 25-75mm, at least one segregating surface extending from the joining surface between the end walls for dividing at least part of the space between the inner and outer walls into at least two regions.

The corner cover can simply be placed in position over the ducting sections. The inwardly projecting wall of the corner cover structure maintains segregation around the curved section of large radius. The wall projecting from the corner cover structure may supplement, overlap or completely replace dividing walls of the ducting. Similarly, it may supplement, overlap or replace wall members extending from the corner piece of the present invention.

Engagement means may be provided on the corner cover part for engaging respective engagement means on the corner pieces according to the present invention. However, the present inventors have discovered that it is not necessary to provide any direct mechanical engagement between the corner piece and the corner cover part. It has been found that a corner assembly can be assembled which has sufficient rigidity in which the corner pieces engage with trunking and the corner covers engage with the trunking without directing engagement between the corner covers and the corner pieces.

In a particularly preferred embodiment of an internal or external bend, the segregating surface extends from the curved wall of the corner cover and there is substantially no upstanding wall projecting from the front of the surface of the corner piece of the invention. In this way, a simple structure can be provided in which segregation is maintained but in which the design of the corner piece is simple.

The corner cover may be a single, integral piece, or alternatively it may comprise a plurality of separate pieces which may be releasably fixed together. The corner structure may be formed from two or more corner structure parts.

The end walls of the corner structure are suitably substantially planar. They maybe defined by a first, substantially straight line segment extending from a corner position, a second line segment which defines a part of the first opening, a curved line segment which defines an end of the joining wall, the radius of curvature of the curved line segment being always greater than or equal to a value in the range 25-75mm, a fourth line segment defining part of the second opening and a fifth, substantially straight line segment which meets the first line segment at the corner. The first and fifth line segment suitably meet at an angle which is in the range of 60° - 120°, most preferably about 90°. In use, the first and fifth line segments are configured to lie against the walls defining the corner around which or into which the corner structure is fitted.

If the corner structure is for use with an internal angle, the included angle in the respective end wall is suitably around 90°. In this case, the curved line segment will define a re-entrant part of the figure defined in the end wall.

In contrast, if the corner structure is for use against an external angle, the first and fifth line segments form a re-entrant structure in the figure defined by the end wall, included angle being in the region of 270°. In this case, the curved line segment defines an externally bowed line.

In use, in a corner assembly according to the second or fourth aspect of the invention, lid members may be provided for the sections of service provision ducting extending substantially up to the corner. Preferably, the members extend substantially up to a corner cover as described above.

In a flat bend, a corner piece may be used both on the inside and outside of the bend.

The surfaces of the corner assembly according to the present invention may be treated with electromagnetic screening material. This material may be applied to any or all of a corner piece, sections of service provision ducting, corner part and selected channels of a section of the service provision ducting. The screening material may be applied to all or part of a surface. Suitably, the electromagnetic screening material comprises a metal, such as copper or aluminium. Suitably it is applied by vapour deposition.

The present invention will be further described by way of example only with reference to the accompanying drawings in which:
Figures 1-4 show sketch isometric drawings of known ways of forming corners in service provision ducting.
Figure 5 is a sketch isometric view of a corner piece according to the first aspect of the invention.
Figure 6 is sketch isometric view of a corner piece, for an external bend, according to the first aspect of the invention.
Figure 7 is a sketch isometric view of a corner piece for use with an internal bend according to the first or third aspect of the invention.
Figure 8 is a sketch isometric view of a corner piece according to the first or third aspect of the invention for an external bend.
Figure 9 is a sketch isometric view of a further embodiment of corner piece for an internal bend according to the first or third aspect of the invention.
Figure 10 is a sketch isometric view of a corner piece for an external bend according to a further embodiment of the first or third aspect of the invention.
Figure 11 is a sketch isometric view of a corner piece according to the first or third aspect of the invention according to a further embodiment.
Figure 12 is a sketch isometric view of a corner piece for the outside of a flat bend according to the first or third aspect of the invention.
Figure 13 is a sketch isometric view of a further embodiment of a further embodiment of corner piece for an external bend according to the first or third aspect of the invention.
Figure 14 is a sketch isometric view of a cover piece for use with the present invention for an internal bend.
Figure 15 is a sketch isometric view of a cover piece for an external bend for use with the present invention.
Figure 16 is a sketch plan view of a corner assembly according to the second or fourth aspect of the invention for an internal bend.
Figure 17 a sketch plan view of a corner assembly according to the present invention for an external bend.
Figure 18 is sketch plan view of service provision ducting incorporating a flat bend using the present invention.
Figure 19 is a sketch isometric view of service provision ducting incorporating an internal bend, using the present invention.
Figure 20 is a sketch isometric view of service provision ducting incorporating an external bend, using the present invention.
Figure 21 is a sketch isometric view of a second embodiment of service provision ducting incorporating an internal bend using the present invention.
Figure 22 is a sketch isometric view of a second embodiment of service provision ducting incorporating an external bend, using the present invention.
Figures 23-30 are views of a fifth and sixth embodiment of a corner piece for service provision ducting according to the present invention.
Figures 31-32 are views of a first corner cover part for an external bend, for use with the present invention.
Figures 33 to 35 are views of a second corner cover part for an external bend, for use with the present invention.
Figure 36 is sketch isometric view of a third embodiment of service provision ducting incorporating an external bend according to the present invention.
Figures 37-39 are the views of a seventh embodiment of corner piece for an external bend according to the invention.

The present invention will be described below in its application to communications cables which must not have a bend radius of less than 50mm (for example some designs of fibre optic cables, telephone cables or category 5e, 6 or 7 cables). However, the present invention can be applied to other cables, for example to fibre optic cables whose bend radius must not be less than any predetermined value which falls in the range 25-75mm. It will be apparent to the skilled person that it is simply necessary to change of radius of curvature of the respective curved parts which are described below as having a radius of curvature of 50mm or not less than 50mm, to the predetermined radius or not less than it.

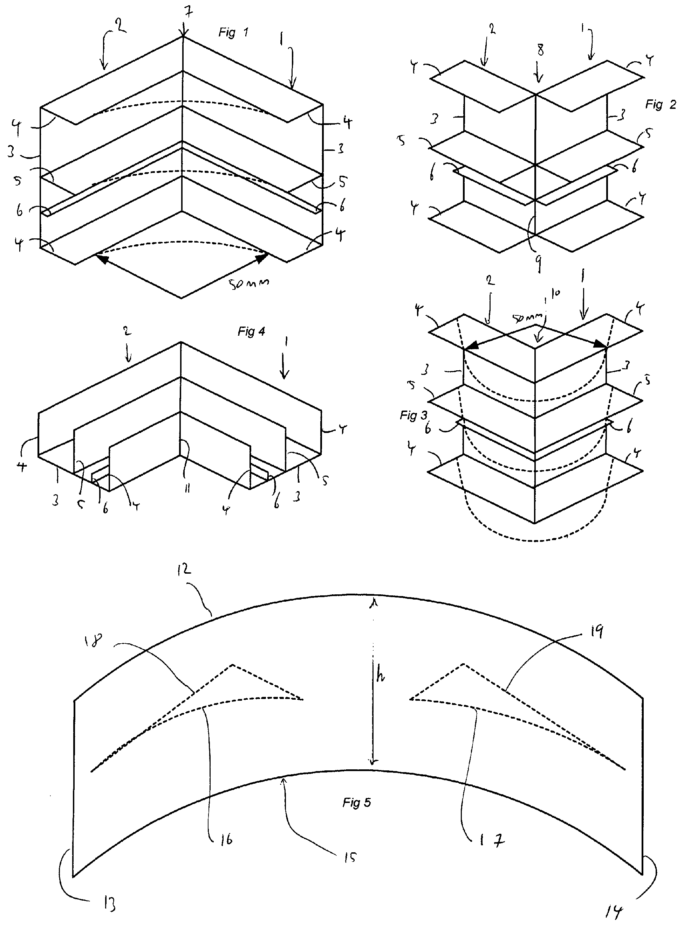

Figures 1-4 show sketch isometric views of various known ways of forming a bend in service provision ducting. In each case, two sections 1,2 of service provision ducting are shown meeting at a corner. Each section of service provision ducting 1,2, two comprises a floor member 3, a pair of wall members 4 extending from the floor member 3 and a segregating wall member 5 extending from the floor member 3 between the wall members 4. The segregating wall member 5 divides the sections of service provision ducting into channels. In one of these channels, a longitudinally extending engagement formation 6 is provided. The detailed design of the formation 6 is not shown, but, as will be well known to the person skilled in the art, it may comprise formations onto which electrical conductors or signal conductors may be fixed.

In figure 1, the two sections 1 and 2 meet at an internal bend at the corner 7. Their ends at the corner 7 are mitred to form a mitre fitting.

In figure 2, two sections of service provision ducting meet an external bend at the corner 8. They are finished to simply abutt along the line 9.

In figure 3, the sections 1 and 2 meet at an external bend at a corner 10. The sections 1 and 2 have a mitre finish so that they meet in a mitre formation at the bend 10. In figure 4, the two sections 1 and 2 meet at a flat bend. Their ends are mitred along the line 11 so that they form a mitre formation.

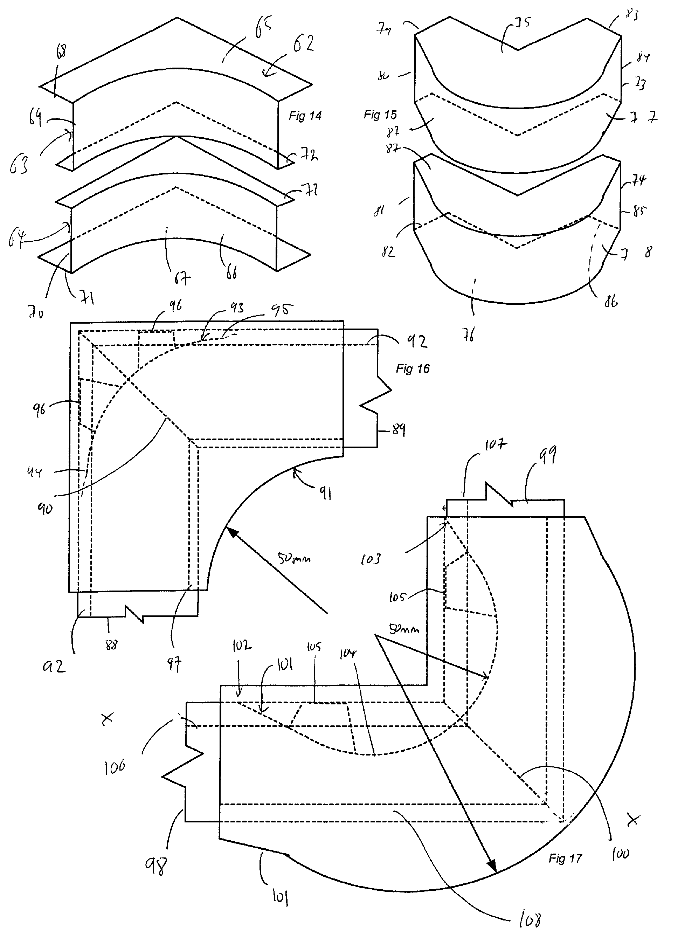

In use, the internal bend of figure 1 will be finished using lid members (not shown). If the lid members were continued to the corner 7, they would meet at a right angle which would have a radius of curvature much less than 50mm. This would give problems with communication cables such as fibre optics of the type which must not be bent to a radius of less than 50mm, otherwise loss of signal quality is obtained. A curve of radius 50mm is shown in figure 1 for illustrative purposes. As will be described further below with reference to figure 16, a special cover can be provided for allowing a bend radius of 50mm to be achieved at the corner. Further, when installers are laying cables into the trunking they may sometimes push them in, which could lead to kinks of radius less than 50mm being formed if the cables are pushed into an internal bend 7.

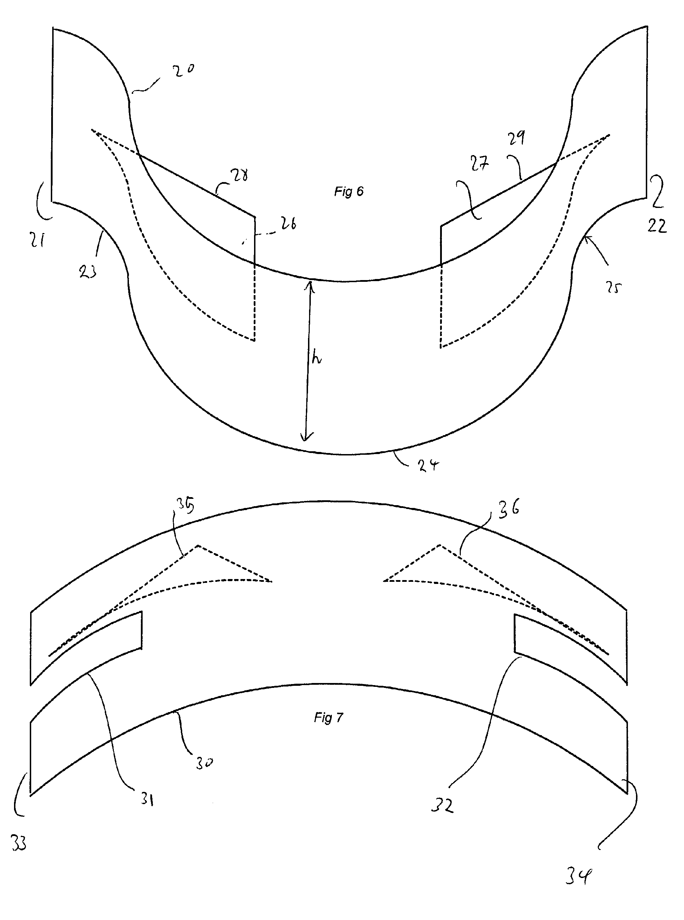

In order to prevent this happening, there is provided according to the first aspect of the invention a corner piece 12 which is shown in figure 5. The corner piece 12 comprises end portions 13 and 14 which, in use are configured to lie against the floor members 3 of the ducting sections 1 and 2. Between the end portions 13 and 14 there lies a curved portion 15 whose radius of curvature is 50mm. The curved portion 15 is curved in the direction joining the ends 13 and 14. However, in the direction of right angles to the direction joining the ends 13 and 14, the curved surface is straight. In this way, the curved surface is slightly flexible about an axis normal to the direction joining the ends 13 and 14. The corner piece 12 is made of moulded thermoplastic material such as uPVC of thickness about 1mm, giving it the necessary flexibility. In use, this allows it to be placed in bends 7 which meet at a variety of angles around 90°.

The height h of the corner piece is substantially the same as the channel width of a channel of the sections of service provision ducting 1,2. Two ribs 16, 17 project from the rear surface of the corner piece 12. Each has a straight edge which, in use, is configured to lie against a floor member 3 of a respective section 1, 2 of ducting.

In an external bend according to figure 2 or figure 3, if cables are pulled tight around the corner 8, 10, they will have a radius of curvature at the bend of much less than 50mm, which can lead to signal degradation in fibre optic cables. A curve of a radius 50mm is shown in figure 3 for illustrative purposes. According to the present invention, this can be overcome by using a corner piece which has a curved section of radius greater than or equal to 50mm.

A suitable first embodiment of a corner piece according to the first aspect of the invention is shown in figure 6. This comprises end portions 21, 22. From the end portion 21 there are, in order, a first curved section 23 of radius of curvature 50mm, a second central curved section 24 of radius of curvature 50mm and a third and final curve section 25 of radius of curvature 50mm which joins to the end portion 22. The curved surface 24 is curved in the direction joining the ends 21,22. In a direction normal to this direction, however, it is straight, allowing it to be flexed slightly, as described above in relation to figure 5. The corner piece 20 will be constructed of the same type of moulded thermoplastic material of thickness about in the range 1.5-3.0mm,as figure 5.

The height h of the corner piece 20 will be designed to be a suitable proportion of the channel width of the sections of ducting 1,2. A pair of ribs 26, 27 project from a rear surface of the corner piece 20. Each has a respective straight edge 28 for lying against a floor member 3 of a respective section of ducting 1, 2.

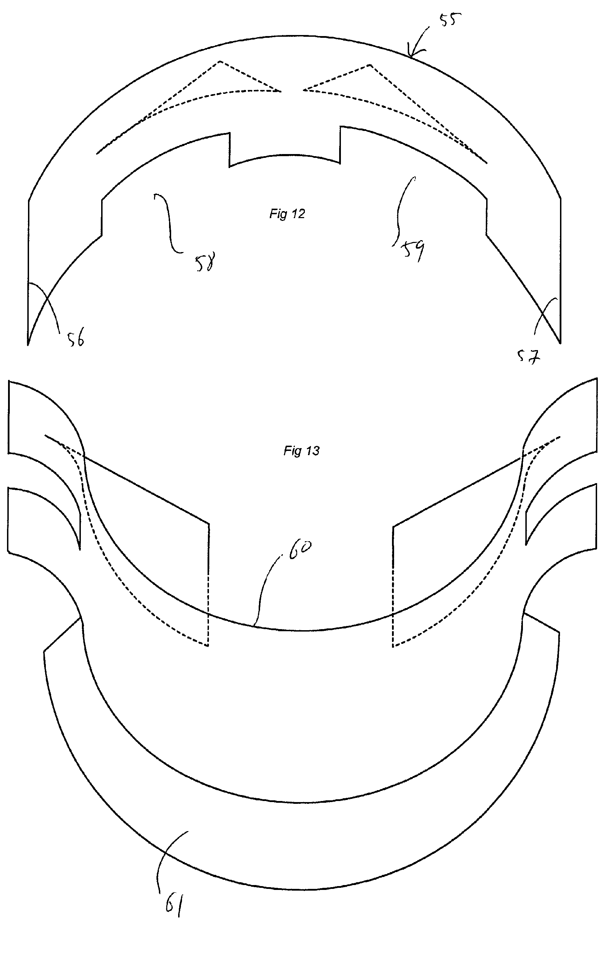

The flat bend of figure 4 will be described further below with reference to figures 11, 12 and 18.

Figure 7 is a sketch isometric view of a corner piece 30 according to the first and third aspects of the present invention. The design of the corner piece 30 is substantially the same as the corner piece 12 of figure 5 and is not described further, except for the provision of a pair of slots 31, 32 which extend for a distance of at least 20mm in the curved direction joining the ends 33 and 34. These are for engaging around the upstanding engagement structures 6 shown in figure 1 as will be further described below with reference to figure 21. It will be noted that the positioning of the ribs 35 and 36 in figure 7 is slightly different to figure 5, so that they do not coincide with slots 31 and 32.

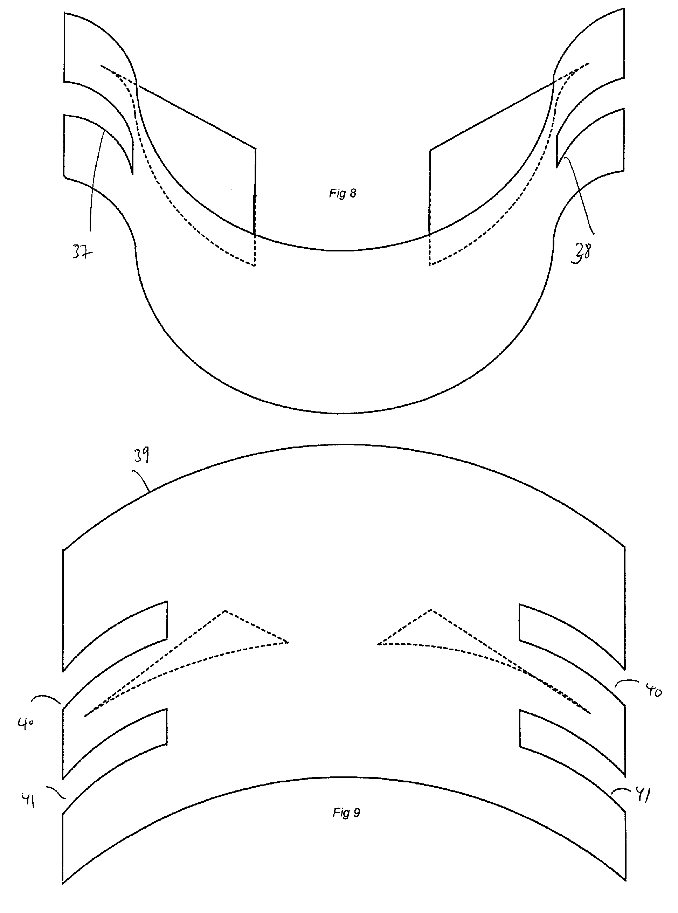

Similarly, in figure 8, there is shown a second embodiment of a corner piece for an external bend, which is according to the first and third aspect of the invention. It is substantially the same as the arrangement shown in figure 6, and will not be described further, except that it comprises a pair slots 37 and 38 each of which extends in the curved direction for at least 20mm and is configured to engage around the engagement structures 6 of the trunking sections as will be described further with reference to figure 22.
Figure 9 shows a third embodiment of a corner piece for an external bend. It incorporates the first and third aspect of the invention. It is similar to the corner piece shown in figure 7, except that it is deeper, being designed to engage in trunking with a wider channel than that shown in figures 1-4 and comprises two slots 40, 41, at each end. The slots 40,41 extend for at least 20mm in the curved direction of the corner piece 39 and are configured to engage around two parallel engagement structures in service provision ducting (not shown).

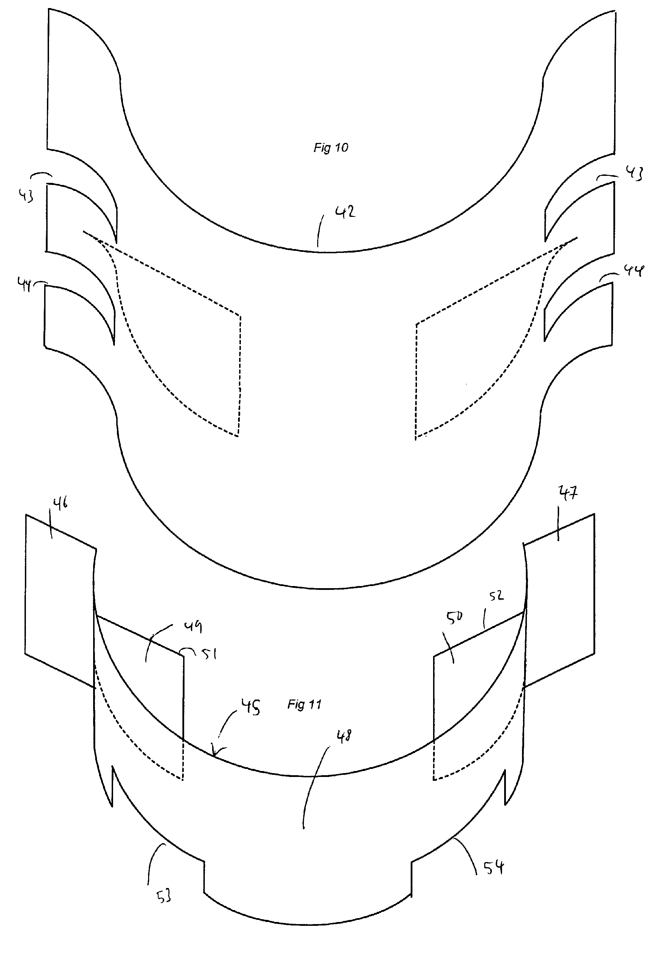

Figure 10 is a sketch isometric view of a corresponding third embodiment of a corner piece for an external bend. This is according to the first and third aspect of the invention. The corner piece 42 again comprises two slots 43, 44, at each end, each of the slots 43, 44 extending for at least 20mm in the curved direction and being configured to engage around engagement structures on the base member of service provision ducting (not shown).

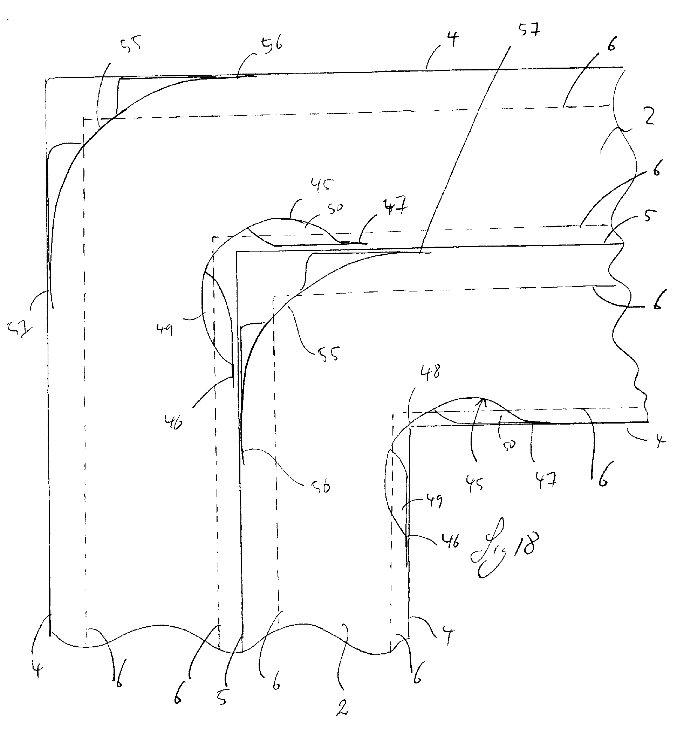

In the flat bend shown in figure 4, if cables are laid in the channels and pulled tight, they will lie taut against the corner 11 and will therefore have a radius of curvature of much less than 50mm. In order to prevent this, a corner piece 45 as shown in figure 11 may be used. This is according to the first and third aspect of the invention. It comprises end portions 46 and 47 which, in use, will lie flat against wall members 4 or the dividing wall 5 of the inside of a bend, as shown in figure 18. The end portions 46 and 47 are joined by a curved section 48 whose radius of curvature is 50mm.

According to the first aspect of the invention, the curved section 48 is curved in the direction joining the end portions 46 and 47 but is straight in a direction normal to the direction joining the end portions 46 and 47 so that it may be flexed around an axis normal to the direction joining the end portions 46 and 47. The corner piece 45 comprises a pair of ribs 49, 50 projecting from a rear face. Each comprises a straight edge, 51, 52, which, in use, lies against a wall member 4 or dividing wall 5 of a section of service provision ducting 1,2. Between the ribs 49 and 50 there is substantially no rib, so that there is no stiffening against flexing in the centre part of the curved section 48. A pair of slots 53, 54 are provided in a lower edge of the corner piece 45. In use, as shown in figure 18, these will extend over an engagement structure 6 which projects upwards from a floor member 3 of the ducting 1 and 2.

When inserting cables into a flat bend, installers tend to push the cables towards the bends. This might result in kinks of radius less than 50mm being formed at the corner 11. To prevent this, a corner piece 55 as shown in figure 12 may be inserted into the outside of the bend, as shown in figure 18. The corner piece 55 comprises a pair of end portions 56, 57, which in use, are configured to lie flat against the dividing wall 5 or outside wall 4 of trunking section 1 or 2, as shown in figure 18. The corner piece 55 comprises a flat curved structure corresponding to that shown in figure 5, to allow a certain amount of flexibility in the middle. It comprises a pair of slots 58, 59 for extending over an engagement structure 6 extending from the floor member 3 of the section of service provision ducting 1 or 2.

It should be noted that the corner pieces 45 and 55 of figures 11 and 12 comprise no upstanding walls projecting in the same direction as the floor member 3. In fact, no such walls are required, because the sections 1 and 2 of service provision ducting, together with lid members (not shown) completely define the channel for conductors and communication cables, making such upstanding walls unnecessary.

Similarly, the corner pieces of figures 5-10 do not comprise upstanding walls extending from the front face of the respective corner piece. As will be described further below, such upstanding wall members are not generally necessary. However, in some arrangements, it is beneficial to have at least one upstanding wall member projecting from a front face of a corner piece, particularly an external bends. A suitable embodiment of a corner piece for use in such an external bend is shown in figure 13. This embodiment accords to the third aspect of the invention and is substantially the same as that shown in figure 8, except that a radially outwardly extending wall 61 is provided, extending from a lower edge of the corner piece 60.

The corner assembly according to the second and fourth aspect of the invention will now be discussed.

First of all, it is necessary to describe corner cover structures which may be used with internal and external bends. Suitable corner cover structures are shown in figures 14 and 15. Figure 14 shows a corner cover structure 62 which is formed out of two separate parts which are releasably joinable together 63, 64 by inter-engaging means which are not shown. Each corner cover part 63, 64 comprises an end wall 65, 66 respectively. When assembled, the space between the ends walls 65 and 66 is slightly greater than the width of the service provision ducting sections 1, 2. When assembled together, a joining wall 67 extends between the first and second and end walls 65 and 66, joining them together. The joining wall comprises a curved section, of which the radius of curvature is 50mm.

The edge 68 of the end wall 65, the edges 69 and 70 of the joining wall sections and the edge 71 of the end wall 66 together define a first opening for receiving a first section of service provision ducting 1. The corresponding edges at the other end define a second opening for engaging a second section of service provision ducting 2. A segregating surface 72 is formed on each corner cover parts 63, 64. It extends from the inside of the curved wall section 66. When in position, the segregating wall 72 extends towards and overlaps the dividing wall 5 of the trunking sections 1 to maintain segregation of the trunking sections around the corner.

Figure 15 is a sketch isometric view of a corner cover structure for an external bend for use with the present invention. It comprises a pair of corner cover parts, 73, 74 which are releasably engagable together by inter-engaging means, not shown. Each part comprises an end face 75, 76. A curved, joining surface part 77, 78 extends away from each end wall 75, 76 respectively. When the corner structure is assembled, the joining surface parts 77 and 78 form a single curved joining wall which has a radius of curvature of not less than 50mm. The edge parts 79, 80, 81 and 82 define a first opening for a first section of service provision ducting. The edge parts 83, 84, 85 and 86 define a further opening for a second section of service provision ducting. A segregating surface 87 extends from each joining wall 77, 78. In use, when the corner structure is assembled, the segregating surface 87 lies adjacent to or overlapping the dividing wall 5 of the sections of service provision ducting. The segregating wall 87 allows the segregation to be continued around the bend.

Figure 16 is a sketch plan view of a corner assembly. It comprises a first section 88 of service provision ducting which meets a second section of service provision ducting 89 at an internal bend defining a mitre 90. The open channel face of the service provision ducting 88 faces to the right hand side of the page. The open face of the service provision ducting 89 faces towards the bottom of the page. A corner cover 91 is placed over the ducting sections 88 and 89. If cables are laid in the ducting section 88 and 89 and pulled tight, they will follow the curve joining wall of the cover member 91 which has a radius of curvature of 50mm. Accordingly, no adverse bends are introduced into the cable. Also shown, in dotted lines, at the base of each section of service provision ducting 88, 89 is an engagement structure 92. A curved corner piece 93 according to the third aspect of the invention has been inserted into the service provision ducting with its ends parts 94 and 95 lying on the floor members of the section of service provision ducting 88 and 89 respectively. The corner piece 93 has no upstanding wall portions which extend in the open direction of the channel parallel to the wall members of the sections of service provision ducting 88 and 89. The curved corner piece is suitably substantially as shown in figure 7 or figure 9. It comprises rib parts 96 which extends from a rear surface of the corner piece 93 to engage with the floor members of the service provision ducting 88 and 89. As will be described further below, slots are provided in the ends 94, 95 of the curved corner piece 93 so that they engage around the edges of the engagement structure 92.

Also visible in figure 16 is a segregating wall 97 which extends inwardly from the curved surface of the corner cover 91, overlapping a dividing wall of the service provision ducting 88, 89 (not shown).

Figure 17 is a sketch plan view of a corner assembly according to the fourth aspect of the invention.

The corner assembly figure 17 includes two sections of service provision ducting 98, 99 which meet at an external bend in a mitre formation at 100. The open channel face of the first section of service provision ducting 98 faces towards the bottom of the page. The open face of the second section of service provision ducting 99 faces towards the right hand side of page. Joining and covering the sections of service provision ducting is a cover member 101 which is suitably substantially as shown in figure 15 above. A curved corner piece 101 is in position at the base of the sections 98 and 99 of service provision ducting. It comprises a first end part 102 and a second end part 103 which rest against floor members of the sections of service provision ducting 98, 99 respectively. They are joined by a curved section 104 of a radius of curvature 50mm. If cables are stretched around the corner, they will lie against the wall of the corner piece 101 so that they have a radius of curvature 50mm. The outer wall of the corner cover 101 has a large radius of curvature so that there is adequate space within the trunking for the cable to extend around the curved corner piece. The curved corner piece 104 further comprises rib members 105 which extend from a rear face of the corner piece and lie on the floor members of the sections of service provision ducting 98, 99 respectively. The corner piece 101 is suitably substantially as shown in figure 8 or figure 10 but it could be replaced by a corner piece substantially as shown in figure 13 if required. Also shown in figure 17 are longitudinally extending engagement members 106, 107 which extend upwardly from the floor members of sections of service provision ducting 98, 99 respectively. Slots which will be described further below, extend from the end portion 102 and 103 of the corner piece 101 and engage around the engaging structures 106 107. Also visible in figure 17, in dotted lines, is the edge of a segregating wall 108 which extends inwardly from the curved wall of the corner cover 101. This segregation surface overlaps internal dividing walls of the sections of service provision ducting 98, 99 to maintain segregation of channels around the bend.

Figure 18 is a sketch plan view of two sections of service provision ducting which meet at a flat bend. The two sections of service provision ducting are cut at 45° at their ends so that they form a mitre formation. Each section comprises a floor member 2, a pair of wall members 4 and a central dividing wall member 5. Longitudinally extending engagement members 6 are shown in dotted lines. These extend from the floor member 2 and are provided for engaging cables and conductors to be placed in the trunking. A pair of corner pieces 45 are shown. One rests against the external walls 4 and the other rest against the dividing walls 5. The end portions 46 and 47 of the corner pieces 45 rest against the respective walls. Each corner piece 45 has a pair of ribs 49, 50 which project from a rear side of the corner piece and rest against the respective walls to hold the corner piece in position. Similarly, there are a pair of corner pieces 55 which are substantially as shown in figure 12. The end parts 57 and 56 rest against the external walls 4 of the sections of service provision ducting and against the internal wall 5 of the section of service provision ducting. A pair of ribs are shown resting against the respective walls for holding the corner piece part in position. The slots 58 and 59 formed in the lower edge of the corner piece extend over the engagement members 6.

Figure 19 is a sketch isometric view of an internal bend according to the second aspect of the invention. It comprises two sections of service provision ducting 109, 110 which meet an internal bend with a mitre formation. A corner piece 113 as shown in figure 5 is located in the channels of the sections of service provision ducting 109 110, with the ribs 111 and 112 lying against floor members of the section of service provision ducting 109, 110 to locate the corner piece securely. No special connecting means are required, because the curved corner piece 113 fits snugly into the channel of the service provision ducting its precise position being located by the ribs 111 and 112.

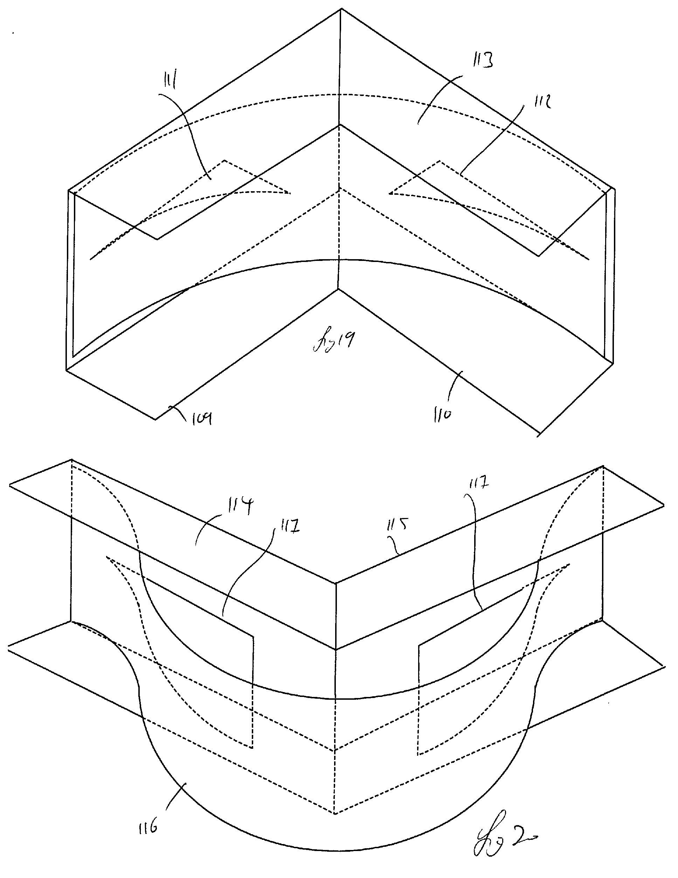

Figure 20 is a sketch isometric view of an external bend according to the second aspect of the invention. It comprises a pair of sections of service provision ducting 114 and 115 which meet at an external bend with a mitre formation. A corner piece 116 which is as shown in figure 6 above is installed in the trunking. Again, its height is matched to the channel width of the sections of service provision ducting so that it is held snugly. It is located in the correct position by the ribs 117 which project from its rear surface and which lie against the floor members of the sections of service provision ducting 114 and 115.

Figure 21 is a sketch isometric view of service provision ducting according to the second and fourth aspects of the invention. In this case, two sections of service provision ducting 118, 119 are shown which meet at an internal bend with a mitre formation. Each section of service provision ducting 118, 119 comprises a longitudinally extending engagement member for engaging with conductors or other fittings in the ducting, 121, 122. A corner piece 120 substantially shown in figure 7 is installed in trunking with the slots 123 engaging members 121, 122.

Figure 22 is a sketch isometric view of an external bend according to the second or fourth aspect of the invention. Here, two sections of service provision ducting 124 and 125 meet at an external bend with a mitre formation. Each section comprises a longitudinally extending engagement member 126, 127 for engaging with conductors or other formations in the channel. A corner piece 128, substantially as shown in figure 8, is inserted into the trunking. Slots in the corner piece 128 engage around the upstanding engagement members 129 and 127.

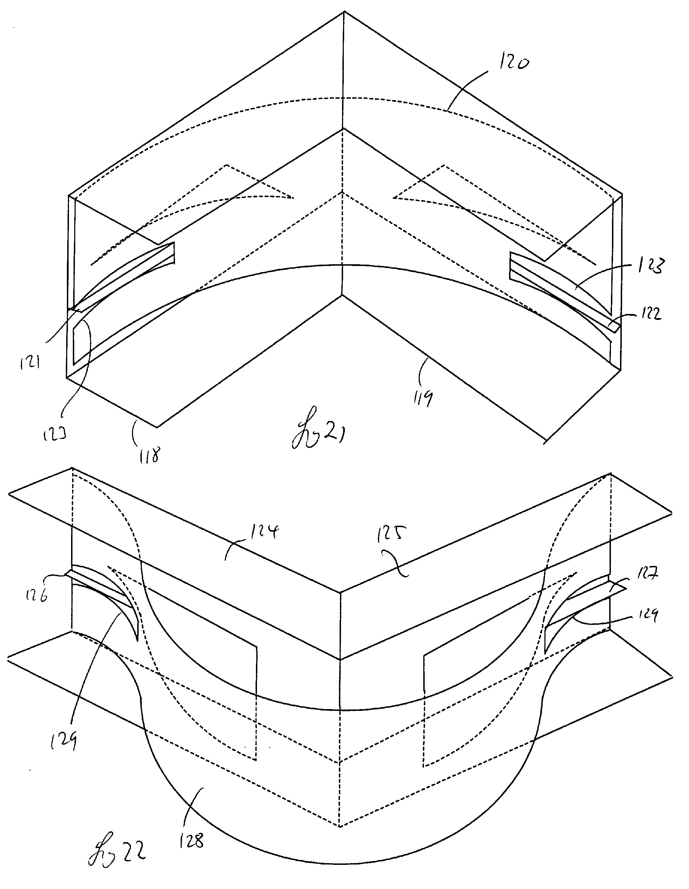

Figure 23 is a sketch isometric view of a corner piece according to the first or third aspect of the invention. It is substantially as shown in figure 8 and will not be described in detail. However, it has following additional features. A pair of slots 131 are formed in a top edge. These slots are provided to assist in construction of a corner assembly. The corner piece 130 is shown in position in figure 36. It can be seen that a corner cover part 139 which will be substantially as shown in figure 32 will have to be pushed in. As can be seen from figure 32, the cover part 139 comprises guide ribs 147. These are designed to engage with the slots 131 formed in the corner piece 130 to aid insertion. A pair of notches 132 are provided near the ends. These are for engaging inwardly projecting structures on service provision ducting, to further fix the corner piece in position. Figure 24 is side view of the corner piece 130.

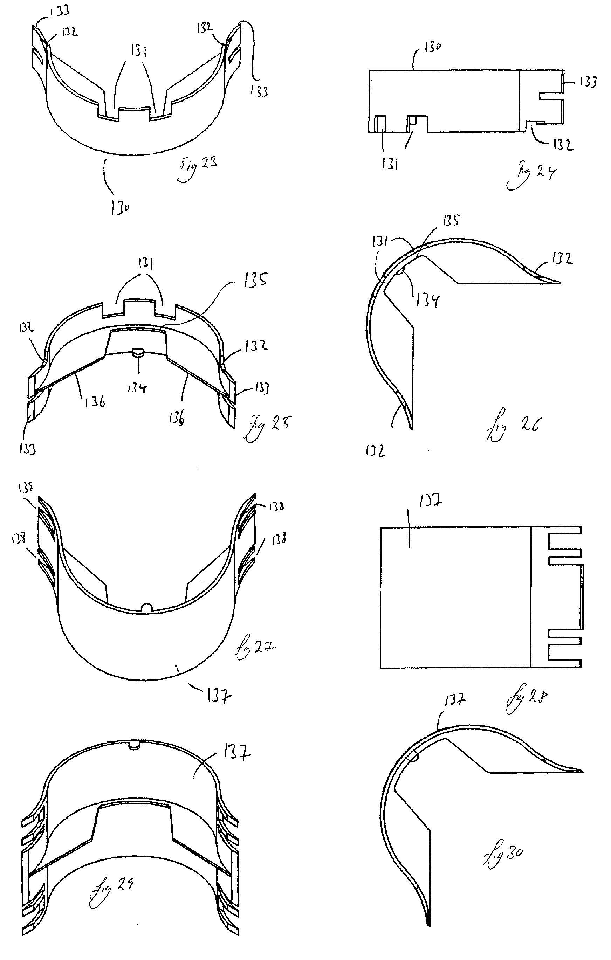

The ends of the corner piece are planed 133 so that they form a smooth connection to the floor member of the service provision ducting without a step. Figure 25 is a rear view of the corner piece of figure 23. A further locating projection 134 is provided to enable the corner piece to be securely placed in the service provision ducting. A thin web 135 can be seen which joins the rib members 136. Because the rib is thin, it does not substantially effect the small degree of flexibility required to allow the corner piece to be fitted into corners which are not quite at 90°. Figure 26 is a plan view of the corner piece of figure 23.

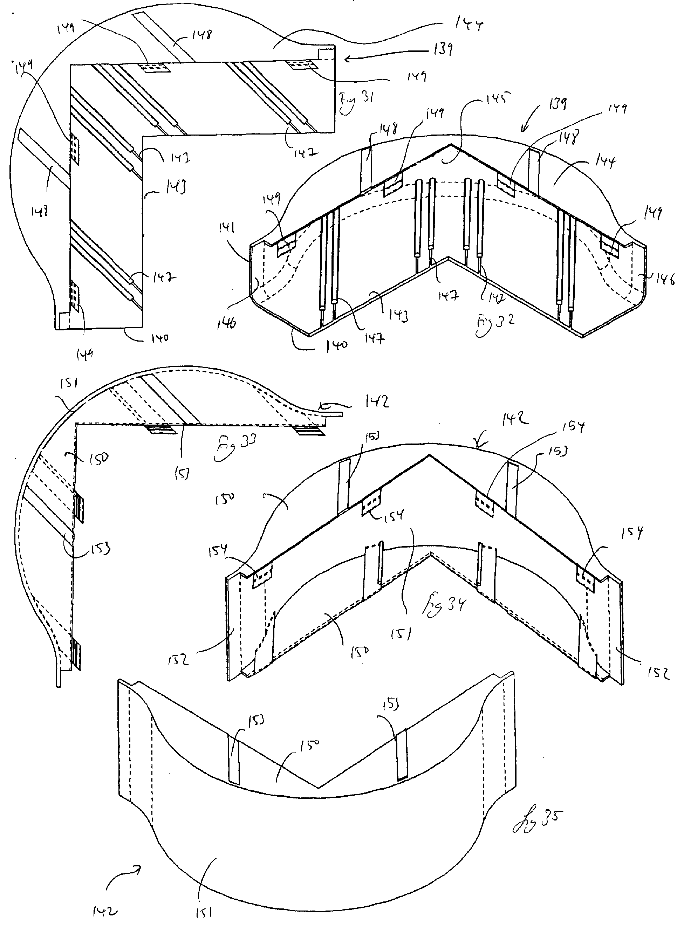

Figure 27 is a sketch isometric view of a fifth embodiment of corner piece according to the third aspect of the invention. It is similar to that shown in figures 23. However, there are no slots in the top edge, so that the corner piece 137 cannot be used in a flat bend. Further, instead of having a single slot at the end, there are two pairs 138 of slots at each end for engaging corresponding pairs upstanding engagement members at the base of a suitable design of service provision ducting. Further, there is no notch on the top edge. Figure 29 is a sketch isometric rear view of the corner piece of Figure 22. Figure 28 is a side view of the corner piece of figure 27. Figure 30 is a plan view of the corner piece of figure 27.

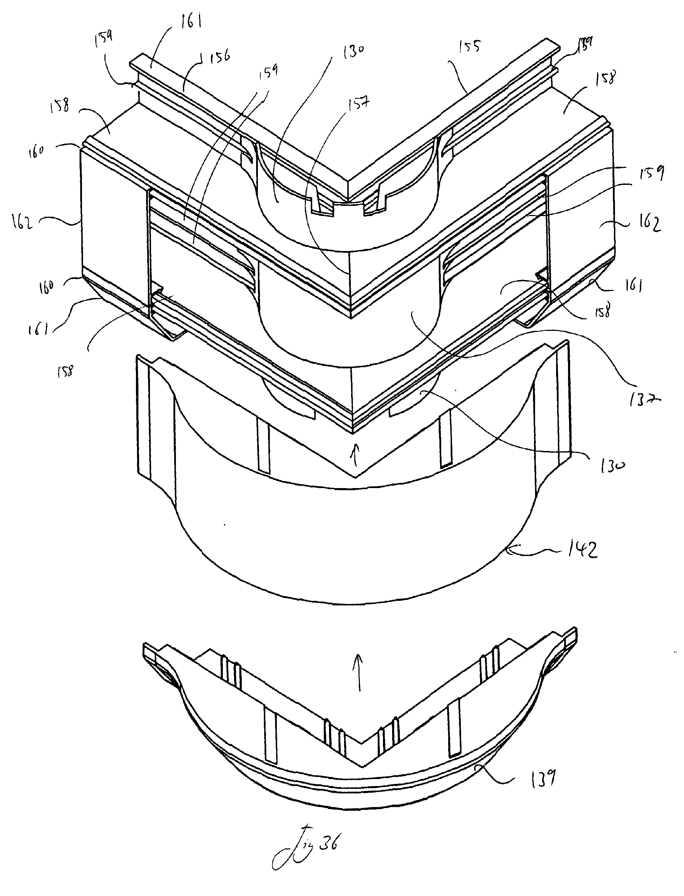

Figure 31 shows a plan view of a first corner cover part for an external bend for use with the present invention. Its use will be explained below in relation to figure 36. The corner cover part 139 comprises an end wall 140 and a curved wall 141 extending from the end wall. The radius of curvature of the curved wall 141 is greater than 50mm being suitably about 90mm. The corner structure part 139 comprises the end wall 140 and a segregating wall 144. A stepped portion 146 is formed in either end of the corner structure part where the corner structure part engages the ends of respective ducting sections, to form a snug fit. Ribs 147 are provided at intervals on the inside of the end wall 140 to act as guides for insertion of the cover part. Ribs are also formed on the segregating wall 148. It can be seen that these ribs extend at 45° to the edges of the corner structure part. In use, the corner structure part will be inserted into the corner in a diagonal direction, generally parallel to the diagonal bisecting the angle of the corner. The ribs are arranged parallel to the diagonal bisecting the angle of the corner, and guide the movement of the cover part into the corner. Finally, connecting means 149 are provided, for a forming a snap fit connection to the walls of service provision ducting (not shown). The connecting means 149 lie in the plane of the segregating surface 144 and their edges are generally parallel to the ribs 147, to ease insertion.

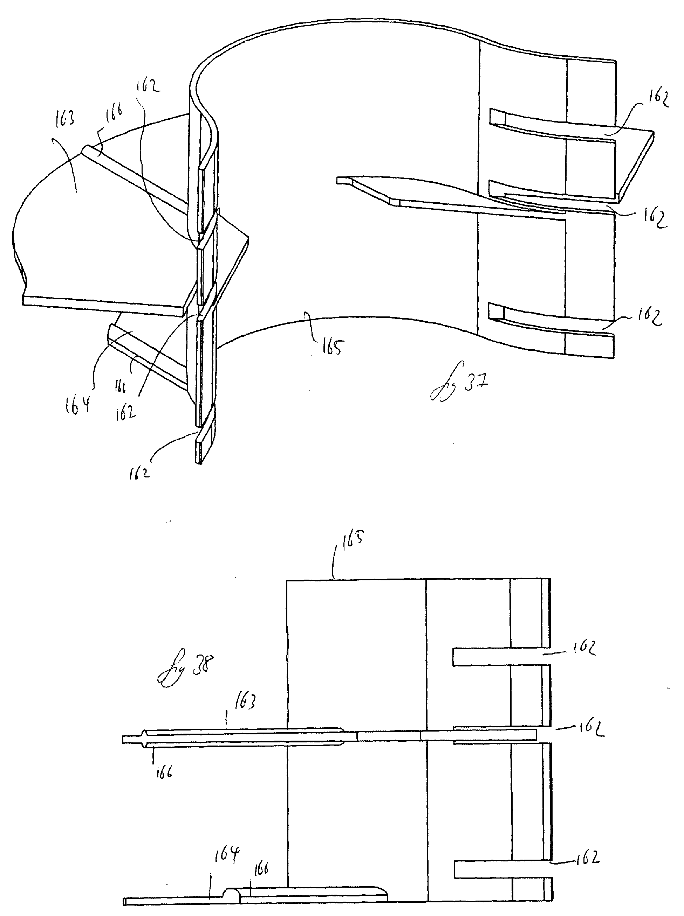

Figures 33-35 shows views of a second corner structure part for the external bend. Figure 33 shows a plan view. Figure 25 shows an isometric view from the rear and figure 35 shows an isometric view from the front.

Two corner structure parts 139 and one corner structure part 142 can be combined together to form a complete corner structure as shown in figure 36.

The corner structure part 142 comprises a pair of segregating walls 150 spaced apart from one another by a curved wall section 151 whose radius of curvature is not less than 50mm and is preferably about 90mm. A stepped section 152 is provided at the end of the corner structure part for engaging the ends of sections of service provision ducting. Guide ribs 153 are formed in the segregating surface, extending in a direction which is generally parallel to the insertion direction, as explained for the corner structure part 139. Connecting means 154 are provided for engaging the top edges of trunking (not shown) to fix the corner structure part in position. The connecting means 154 extend in the plane of the segregating surface 150 and their side edges are parallel to the strengthening ribs 153 and the insertion direction, as explained further above.

Figure 36 is a sketch isometric view showing the how the components of figures 23-35 may be assembled into a corner structure. The corner is built up from a pair of sections of service provision ducting 155, 156 which meet in a mitre formation at an external corner 157. Each section of service provision ducting comprises a pair of dividing walls 158 for segregating the trunking into three or more channels. Further, there are provided a plurality of engagement members 159 extending from the floor member of the sections of service provision ducting, for engaging conductors and other fittings which are not shown. The outwardly facing edges 160 of the dividing walls 158 of the trunking sections 155 and 156 are configured to define engaging formations.

The outside wall 161 of the service provision ducting sections is short, the outer channel being defined in use generally by lid member 162. A further lid member 162 is provided for closing the main channel of the service provision ducting.

In the top channel of the service provision ducting, a corner piece according figure 23 is inserted, with the slots engaging around the engagement means 159. In the central channel, a corner piece 137 as shown in figure 27 is engaged, with its slots engaging the engagement means 159. A further corner piece 130 according to figure 23, in an inverted position compared to the corner piece 130 at the top, is engaged with the lower channel.

To close the main channel, a corner cover section 142 as shown in figure 35 is provided. When it is pushed into position, the connecting means 154 (not visible in figure 36) will engage in the ends 160 of the dividing walls 158 forming a secure connection. As a result, a completely enclosed channel whose radius on the inside of the bend is not less than 50mm will be defined for the main channel. A pair of corner cover parts 139 can be engaged with the top and bottom channels in a similar way. For clarity, the corner cover part at the top is not shown.

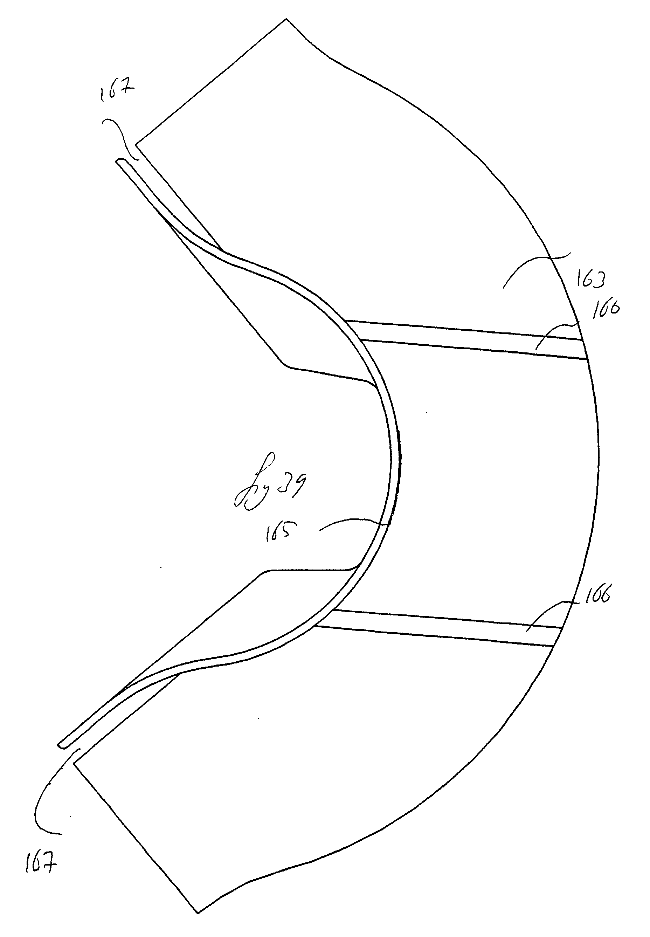

Figure 37-39 shows a further embodiment of a corner piece according to the third embodiment of the invention. It is generally as shown in figure 10 except that instead of having two slots, there are three slots 162 for engaging upstanding engagement members in service provision ducting. Further, there are two segregating walls 163, 164 extending from the front surface of the corner piece 165, for providing segregation around an external bend where this cannot be provided by the service provision ducting. The segregating surfaces 163, 164 comprise guide ribs 166.

Further base slots 167 are formed at the ends of the segregating surface 163. When in position in service provision ducting with the slots 162 engaging over relatively shallow engagement members, the slots 167 provide a sufficient cut away of the base of the segregating surface 163 to prevent it fouling on the upstanding engaging members.

The present invention has been described above by way of example only and modifications can be made within the scope of the invention which extends to equivalents of the features described. The invention also consists in any individual features described or implicit herein or shown or implicit in the drawings or any combination of any such features or any generalisation of any such features or combination.

## Claims

1. A corner piece for extending between two sections of service provision ducting comprising:
at least one surface comprising two-end portions connected by a centre portion,
the surface including at least one curved region, curving in a direction extending between the end portions, the curved region having a radius of curvature of not less than a value in the range 25mm to 75mm, the corner piece comprising at least one rib protruding from a rear surface of the corner piece, the corner piece having no walls projecting from the front surface thereof.

2. A corner assembly comprising:
first and second sections of service provision ducting meeting at an angle, each section comprising a longitudinally extending floor member and at least one longitudinally extending wall member projecting from the floor member, a corner piece being provided, extending between the two sections of service provision ducting, the corner piece comprising a surface having a first end and a second end, and a curved section of radius not less than a value in the range 25mm-75mm joining the first and second ends of the corner piece, the corner piece having no walls projecting therefrom in the direction parallel to the wall members, the corner piece comprising at least one rib projecting from a rear surface and lying against the floor member or wall member of the first or second section of service provision ducting.

3. A corner piece for extending between two sections of service provision ducting, comprising at least one surface comprising two end edges, the surface being curved in a curve direction extending between the end edges, the radius of curvature being not less than a value in the range 25mm - 75mm, the surface comprising at least one slot extending in the curve direction from at least one end edge for at least 15mm.

4. A corner assembly comprising first and second sections of service provision ducting, each section comprising a longitudinally extending floor member, at least one longitudinally extending wall member projecting from the floor member and at least one longitudinally extending engagement member projecting from the floor member, a corner piece being provided extending between the two sections of service provision ducting, the corner piece comprising a surface having a first end lying on the floor member of the first section of service provision ducting and a second end and a curved section of radius of curvature not less than a value in the range 25mm - 75mm joining the first and second ends, the first end having at least one slot extending along the corner piece, the edges of the slot engaging around an engagement member of the first section of service provision ducting.

5. A corner assembly comprising first and second sections of service provision ducting, each section comprising a longitudinally extending floor member and at least one longitudinally extending wall member projecting from the floor member, the floor members being substantially co-planar, and at least one engagement member projecting from the floor members, a corner piece being provided extending between the two sections of service provision ducting, the corner piece comprising a surface having a first end lying on the wall member of the first section of the service provision ducting and a second end and a curved section of radius not less than a value falling in the range 25-75mm joining the first and second ends, at least one edge of the curved section extending between the ends comprising at least one slot engaging around the engaging member of the first section of service provision ducting

6. A method of assembling a corner assembly according to claim 2,4, or 5, comprising inserting a corner piece into a corner comprising two sections of service provision ducting meeting at an angle.

7. A method of assembling a corner assembly, comprising inserting a corner piece according to claim 1 or 4 into a corner comprising a two sections of service provision ducting meeting at an angle.

8. A method according to claim 6 or 7, wherein the corner comprising the two sections of service provision ducting is a pre-existing corner.
